# EUROPEAN PATENT APPLICATION

(11) **EP 1 816 447 A2**
(43) Date of publication of application: **08.08.2007**
(21) Application number: 07101435.1
(22) Date of filing: 30.01.2007
(51) Int. Cl.: G01F 3/10, G01F 9/00

(54) **Device and method for measuring fuel consumption in internal combustion engines**

(30) Priority: 01.02.2006 AR P060100357
(71) Applicant: Pividori, Marcelo, Buenos Aires (AR)
(72) Inventor: Pividori, Marcelo, Buenos Aires (AR)
(74) Representative: Gervasi, Gemma

(57) **Abstract**

A device and method for measuring fuel consumption for internal combustion engines that comprises a single installation block that has two chambers wherein respective flow meters are installed each of which is connected to the feed and return of fuel respectively and to a data processing circuit that takes flow measurements and delivers a fuel consumption result corrected by return, temperature, runoff, etc.

## Description

### Field of the invention

The present invention relates to the field of sensors or control devices for measuring fuel consumption in internal combustion engines, whether diesel or petroleum engines and a method therefor, wherein the present sensors operate autonomously with the most accurate control of the fuel rate fed to injectors and corrected by parameters such as the fuel flow returned to the tank and runoff.

### Description of the prior art

Measurement of fuel consumption while a vehicle is in motion is a task that many car and truck manufacturers have undertaken, because this consumption parameter is one that is evermore important whether in the daily use of a family vehicle or in the case of transport vehicles for which this consumption represents a variable in calculating the operating costs.

There are measurement systems that use a flow meter designed to measure the fuel that passes into the engine, but in the particular case of diesel engines measurement of this parameter is insufficient insofar as it does not take into account other important variables. For example, in diesel engines the fuel that enters the injectors is not totally consumed in the engine but rather part of it is not injected into the engine and, on the contrary, is redirected to a tank. To prevent erroneous measurement conventional devices override the return between the measurement device and the engine through a derivation, or by-pass, with which the error that would be generated by the fuel's return to the tank is avoided.

One of the disadvantages of known systems such as the one mentioned above is that said by-pass imposed on the feed circuit alters the pump's functioning conditions and modifies the pressure of the return circuit. This represents a considerable disadvantage given that the return as it passes through the return valve guarantees correct pressure in the pump's injection chamber whose alteration gives undesirable results.

Another disadvantage of the abovementioned systems is that one of the functions of the return circuit is eliminated, which is to cool the injection system meaning that premature degeneration of the system itself occurs. An additional disadvantage is that the return also possesses the function of maintaining the injection pump free of fuel vapour bubbles generated by the effect of the elements of the injection chamber in sending part of the fuel towards the tank. Finally, some known sensors do not have the adjustment capacity for the multiple physical variations both between sensors and in the fuel and likewise, all known sensors require a panel for analysis and display of the required information.

By virtue of the current state of the art available for measuring fuel consumption in internal combustion engines, it would be desirable to have a new device that without altering the functioning conditions of a conventional circuit, can be easily installed on one, contemplate correct measurement of the fuel genuinely consumed and possess the quality of operating autonomously without needing a panel or indication means, storing the information on the sensor itself, to which access is provided when desired using a reader.

### Brief description of the invention

Therefore, the object of the present invention is to offer a fuel consumption device for internal combustion diesel engines that comprises a single installation block with two chambers within which respective flow meters are installed, each of which is connected to the fuel feed and return respectively and to a data-processing circuit that measures the flows and delivers a result of fuel consumption corrected by return, temperature, runoff, etc.

Yet another object of the present invention is to offer a fuel measuring device for internal combustion diesel engines that comprise a fuel tank, a transfer pump, an injection pump and a fuel return that connects the injectors with the tank, where the device comprises an installation block that defines a first and a second flow measuring lobular chamber inside which a first and a second flow meter are installed respectively, with each flow meter comprising two lobular rotors mounted in a gyratory manner within their respective chambers, with the first chamber presenting a fuel input connected to the transfer pump and a fuel output connected to the injection pump and with the second chamber having a fuel input connected to the injectors' return and a fuel output connected to the fuel tank, with the cited lobular rotors of the abovementioned flow meters connected in relation to the detection of rotation with respective rotation sensors that in turn are connected to a data processing circuit.

Another object of the present invention is to offer a method for measuring the consumption of fuel in internal combustion engines that comprises the stages of:
having a first flow meter between the transfer pump and the engine's injection pump and measuring the flow meter's rotation,
having a second flow meter between the engine's fuel return and the fuel tank and measuring the flow meter's rotation,
calculating the differential flow between both flow meters and
adjusting the flow produced by measuring the temperature of the fuel that passes through both flow meters.

An additional object of the present invention is to offer a method for measuring fuel consumption in internal combustion engines, as described above, that includes the stage of storing the consumption information obtained from the sensor, that will make it possible for it to operate autonomously or without requiring a panel or indicator means, enabling delivery of this information through communication with a reader when the information is required.

### Brief description of the drawings

For greater clarity and to facilitate an understanding of the object of the present invention, we have illustrated it in various figures, wherein the invention has been represented in one of its preferred embodiments, all by way of example, wherein:
- Figure 1: shows a schematic diagram of a conventional diesel fuel circuit;

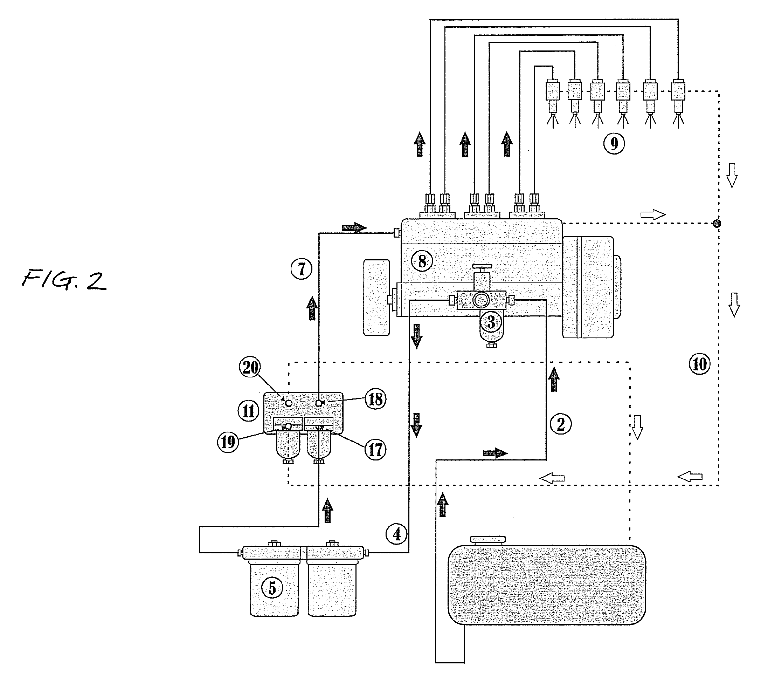

- Figure 2: shows a diagram of the circuit of Figure 1 in which the present invention's measuring device has been installed;
- Figure 3: shows a perspective view of the device according to the present invention, shown without its closing lid so that its constituent parts can be seen, and
- Figure 4: shows a plan view of the device of Figure 3 also without the closing lid.

### Detailed description of the invention

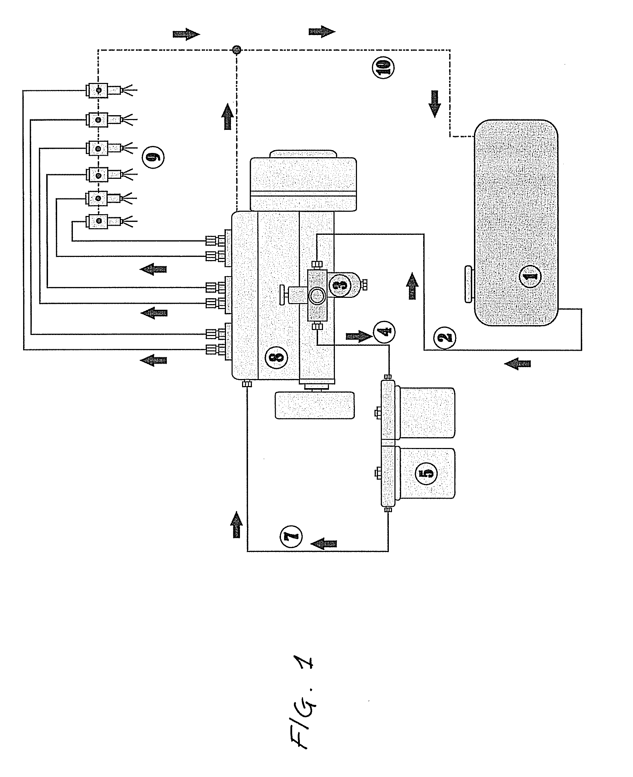

Now, with reference to the figures, we can see that the invention consists of a device for measuring the consumption of fuel in an internal combustion engine. Reference is subsequently made to a preferred application of the device to a diesel engine that comprises a circuit such as the one illustrated in Figure 1. This conventional diesel circuit consists of a fuel tank 1 that by means of a line 2 feeds fuel to a transfer pump 3 from which the fuel is taken, through an input filter 4 (8), to the injection pump 8 by means of a conduction line 7. Injectors 9 receive the fuel from injection pump 8 and inject it into each of the engine's combustion chambers. However, not all the fuel fed by the pump 8 to the injectors 9 is injected into the engine and, on the contrary, part of the pumped fuel is returned to the tank 1 through the return line 10. This line is the one overridden by conventional measuring devices with the damage it represents to the injection system.

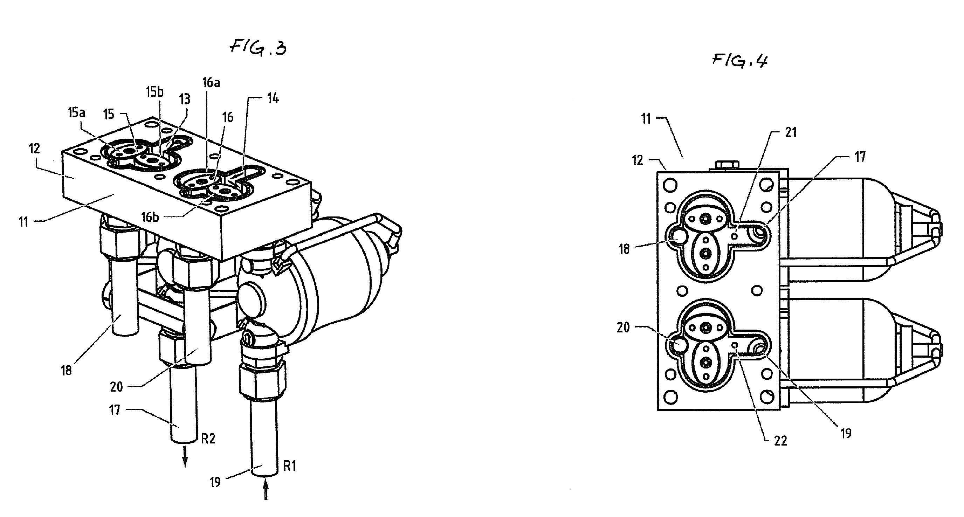

According to the invention, the measuring device indicated by reference number 11 is installed, on the one part, on line 7, between filter 5 and injection pump 8, and on the other part, is connected on line 10 between injectors 9 and the tank. More specifically, as better illustrated in Figures 3 and 4, the device 11 comprises an installation block 12, preferably made in a single piece of appropriate material, such as for example resin, aluminium, tooled or by injection, and what is similar, which has a first lobular chamber 13 and a second lobular chamber 14 within which a first flow meter 15 and second flow meter 16 are installed, each in its respective chamber. Each flow meter comprises two lobular rotors 15a-b and 16a-b with an oval shape and cogged periphery so that they engage as illustrated in Figures 3 and 4.

The first chamber 13 has a fuel input 17 connected to the transfer pump 5 and a fuel output 18 connected to the injection pump 8. For its part, the second chamber 14 has a fuel input 19 connected to the return of the injectors 9 and a fuel output 20 connected to the fuel tank 1. In this way, when the fuel enters through input 17 and leaves through output 18 it makes the rotors 15a and 15b gyrate and similarly, when the return fuel enters through input 19 and leaves through output 20 it makes rotors 16a and 16b gyrate. The rotors' gyration, indicated by the corresponding arrows above the rotors, is sensed without contact with the rotors by sensors, for example magnetic sensors, that form part of a circuit or electronic plate or data processing circuit. Likewise, each chamber 13 and 14 includes a temperature sensor 21 and 22 respectively. In this way, the device is able to sense input flow and temperature of the fuel to the pump as well as temperature and flow of the fuel return. The information referring to the rotation of the flow meters and temperature makes it possible to deliver data locally and in real time on the fuel consumption, as a differential measurement between the flow of input to the pump and the pump's return flow, making adjustments for the runoff effect according to the flow independently of each chamber, with said adjustments loaded onto the sensor at the time of its calibration. The runoff effect is calculated on the basis of the change in density generated by the temperature on the fuel. The installation may have only three conductors and the information can be stored on memory so as to, for example, add up the number of litres of consumed fuel, traceability, events, etc. By these three cables, the control circuit is fed **by an external power supply**, and communicates with the reader from which the stored information can be extracted.

According to another aspect of the invention, the operation and control of the device is conducted by means of a method for measuring the consumption of fuel by means of the stages of having said first flow meter between the transfer pump and the engine's injection pump and measuring the rotation of the flow meter, having the second flow meter between the engine's fuel return and the fuel tank and measuring the rotation of the flow meter, calculating the differential flow between both flow meters and adjusting the flow produced by means of measuring the temperature in the fuel that passes through both flow meters.

## Claims

1. A fuel measuring device (11) for internal combustion diesel engines comprising a fuel tank (1), a transfer pump (3), an injection pump (8) and a fuel return line (10) that connects injectors (9) to the tank (1), and a power supply whereby the device (11) is connected to operate in an autonomous manner,
**characterised in that** it further comprises an installation block (12) that defines a first and a second lobular flow metering chamber (13,14) wherein a first and a second flow meter (15,16) are respectively installed, each flow meter (15,16) comprising two lobular rotors (15a,15b;16a,16b) installed in rotating manner inside said respective chambers (13,14), said first chamber (13) having a fuel input (17) connected to the transfer pump (3) and a fuel output (18) connected to the injection pump (8), and said second chamber (14) having a fuel input (19) connected to the injectors' return line (10) and a fuel output (20) connected to said fuel tank (1), said lobular rotors (15a,15b;16a,16b) being connected in a co-operating rotating manner with respective rotation sensors and to a data processing circuit.

2. Device (11) according to claim 1, **characterised in that** each flow meter chamber (13,14) includes a temperature sensor (21,22).

3. Device (11) according to claim 2, **characterised in that** said rotation sensors comprise no contacting magnetic detectors co-operating with said lobular rotors (15a,15b;16a,16b).

4. Device (11) according to any of claims 1 to 3, **characterised in that** said block (12) is made of an integral piece of resin.

5. Device (11) according to any of claims 1 to 3, **characterised in that** said block (12) is made of an integral piece of aluminium.

6. Device (11) according to any of the preceding claims, **characterised in that** each one of said lobular rotors consists of an oval or elliptical periphery shaped gear (15a,15b;16a,16b), the arrangement being such that a first gear rotor (15a;16a) engages a second gear rotor (15b;16b).

7. Method for measuring fuel consumption comprising the device (11) according to any of the preceding claims, **characterised in that** it comprises the steps of:
mounting said first rotating flow meter (15) between said transfer pump (3) and said engine injection pump (8) and measuring the rotation of said flow meter (15),
mounting said second flow meter (16) between said engine fuel return line (10) and said fuel tank (1) and measuring the rotation of said second flow meter(16),
calculating the differential rate flow between both flow meters (15,16), and
adjusting the calculated flow in the preceding step by measuring the fuel temperature in both of said flow meters (15,16).
